# EUROPEAN PATENT SPECIFICATION

(11) **EP 1 738 970 B1**
(45) Date of publication and mention of the grant of the patent: **18.05.2011**
(21) Application number: 06114765.8
(22) Date of filing: 31.05.2006
(51) Int. Cl.: B60R 21/215

(54) **Airbag apparatus for vehicle and airbag cover**
Airbageinrichtung für Fahrzeug und Airbagabdeckung
Dispositif d'airbag pour véhicule et couvercle d'airbag

(30) Priority: 31.05.2005 JP 2005160249
(43) Date of publication of application: 03.01.2007
(73) Proprietor: Sanko Gosei Kabushiki Kaisha, Toyama-ken (JP)
(72) Inventor: Yasuda, Mitsuo, Toyama-ken Toyama (JP); Katagashi, Ryoichi, Toyama-ken Toyama (JP); Ishikuro, Yusuke, Toyama-ken Toyama (JP)
(74) Representative: Stanley, David William

(56) References cited:
- EP-A- 1 251 039
- EP-A- 1 348 601
- EP-A- 1 468 878
- WO-A-99/01317
- FR-A- 2 793 207

## Description

The present invention relates to airbag apparatus for a vehicle and to an airbag cover for covering airbag apparatus. Preferred embodiments of the invention relate to an airbag cover which has a surface layer and a foam layer and which has a fracture groove for deployment of an airbag and to an airbag apparatus for a vehicle which utilizes such an airbag cover.

The term "fracture groove" used in relation to the present invention refers to a weakened portion or a fracture portion for fracture opening which is composed of successive holes formed on the reverse or inside surface of an interior panel of a vehicle through irradiation with a laser beam generated from laser generation means in the form of laser pulses, or a groove continuously or intermittently formed on the reverse or inside surface of the interior panel by use of a cutting tool or the like.

There has been known an airbag apparatus for a vehicle for protecting a person in a vehicle such as an automobile; for example, a driver or a passenger sitting in the front passenger seat, from impact upon head-on or side collision of the vehicle. Such an airbag apparatus includes an airbag, an airbag case for accommodating the airbag folded such that the airbag can easily inflate and deploy, and an inflator for inflating the folded airbag within a short period of time. In particular, an airbag apparatus which is used for the front passenger seat is disposed behind an airbag cover, which forms an interior panel or the like. When the automobile decelerates suddenly because of, for example, a collision, the inflator is operated so as to rapidly inflate the airbag, thereby to rupture and open the interior panel along the fracture groove and cause the airbag to inflate and deploy toward the outside of the airbag cover. Thus, the airbag apparatus protects the passenger from impact of the collision.

The fracture groove for causing the airbag of the airbag apparatus to inflate and deploy toward the outside of the airbag cover is formed by forming successive small holes on the reverse surface of the interior panel through irradiation with a laser beam (*see, for example,* Japanese Patent Application Laid-Open (kokai) No. 2005-22453).

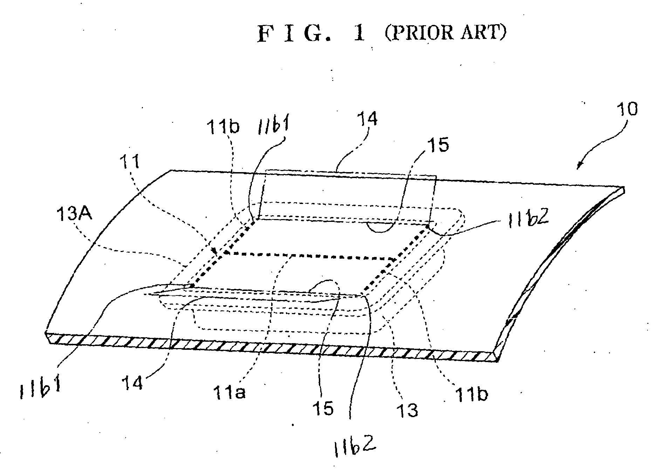

A conventional airbag apparatus for a vehicle will now be described with reference to Figure 1, Figure 2, and Figures 3A and 3B of the accompanying diagrammatic drawings.

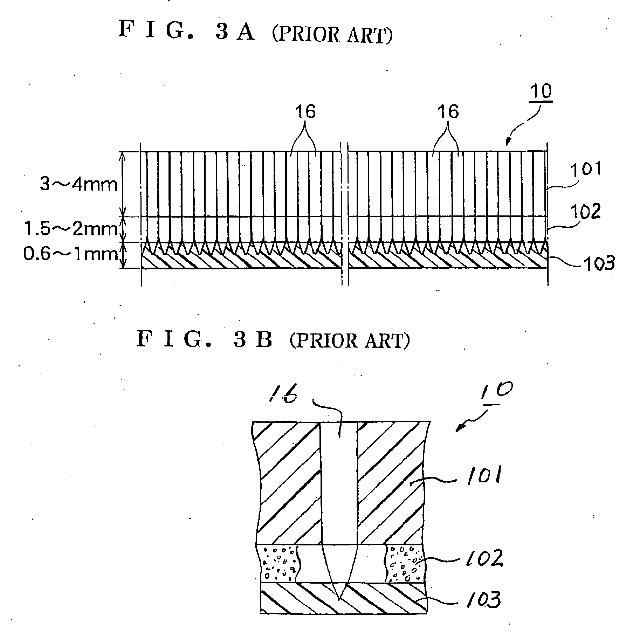

An airbag cover 10 shown in Figure 1 corresponds to an interior cover of a vehicle, and is formed into a three-dimensionally covered plate. As shown in Figures 3A and 3B, the airbag cover 10 has a three-layer structure; i.e. it includes a substrate 101 formed of hard polypropylene (PP) and having a thickness of 3 mm to 4 mm; a foam layer 102 layered over and bonded to the surface of the substrate 101, formed of foamed polypropylene, and having a thickness of 1.5 mm to 2 mm; and a surface layer 103 layered over and bonded to the surface of the foam layer 102, formed of thermoplastic polyolefin (TPO), and having a thickness of 0.6 mm to 1 mm.

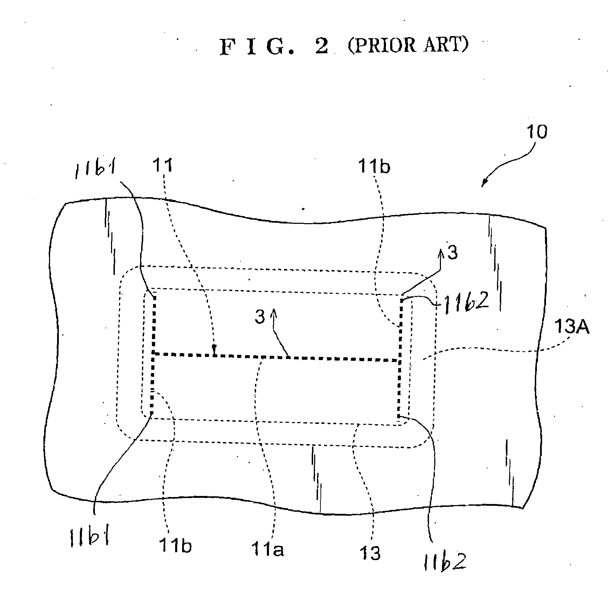

As shown in Figures 1 and 2, a fracture groove 11 (indicated by a thick broken line) is formed on the reverse surface of the airbag cover 10 so as to enable an airbag to inflate and deploy to the outside of the airbag cover 10. The fracture groove 11 is composed of a single first fracture groove 11a extending in a longitudinal direction, and two second fracture grooves 11b connected to the opposite ends of the first fracture groove 11a and extending perpendicular to the first fracture groove 11a. These fracture grooves 11a and 11b form a generally H-like shape as viewed from above.

In elongated regions between the opposite ends 11b1 of the left-hand second fracture groove 11b and the opposite ends 11b2 of the right-hand second fracture groove 11b, the thickness of the airbag cover 10 is made smaller than the remaining regions through removal of the material from the reverse surface of the airbag cover 10, thereby to form hinge portions 15 of fracture-opening subsections 14 (indicated by two-dot chain lines), which are formed as a result of fracture of the fracture groove 11.

As shown in Figures 3A and 3B, the first and second fracture grooves 11a and 11b are formed by forming successive small holes (blind holes) 16 on the reverse surface of the airbag cover 10 through irradiation with an infrared laser beam having a beam diameter of 0.2 to 0.5 mm and a wavelength of 10.6 µm, in such a manner that the small holes pass through the substrate 101 and the foam layer 102 and reach the surface layer 103.

A flange portion 13A of a frame 13 is bonded, by means of vibration welding or any other suitable process, to the reverse surface of the airbag cover 10. The frame 13 is formed of PP or TPO and has a size sufficient to surround the fracture groove 11.

Reinforcement members (not shown) formed of PP or TPO are attached to the inner wall of the frame 13 so as to enhance the mechanical strength of a portion of the airbag cover 10 corresponding to the areas surrounded by the first fracture groove 11a, the second fracture grooves 11b, and the hinge portions 15. Portions of the reinforcement members are bonded, by means of vibration welding or any other suitable process, to the reverse surface of the airbag cover 10 in the above-mentioned areas. Moreover, an airbag apparatus including an airbag, an airbag case, and an inflator, which are not shown, is attached to the frame 13.

The thus-configured conventional airbag apparatus functions in the following manner. Upon collision of the vehicle, an impact force caused by the collision is detected by a sensor. A control unit including a CPU judges whether or not the detected impact force is equal to or greater than a predetermined value. When the control unit judges that the impact force is equal to or greater than the predetermined value, the control unit issues a signal for causing the inflator to generate a high-pressure gas. The gas is fed to the airbag so as to promptly inflate the airbag. The inflating airbag presses, from inside, the airbag cover 10 in the regions surrounded by the fracture groove 11 and the hinges 15. As a result, the airbag cover 10 is ruptured along the first and second fracture grooves 11a and 11b.

The fracture-opening subsections 14, formed as a result of the rupture of the airbag cover 10, are opened in the manner of a casement (French window), while being turned about hinge portions 15. As a result, the airbag inflates and deploys to the outside of the airbag cover 10.

Serving as a cushion, the inflated airbag supports the passenger at his/her chest or head, thereby protecting the passenger from the impact force of collision.

However, the above-described conventional airbag cover 10 has the following drawback. Since the hinge portions 15 of the fracture-opening subsections 14, which are opened when the airbag cover 10 is ruptured along the fracture groove 11 upon inflation of the airbag, are thinner than the remaining portions, sink marks are produced on the substrate 101 at locations corresponding to the hinge portions 15, whereby sink marks or concave portions are formed on the outer surface of the airbag cover 10. As a result, the appearance of the airbag cover 10 is impaired, and the aesthetic effect is spoilt.

Moreover, in the conventional airbag cover 10, since the small holes 16, which constitute the first and second fracture grooves 11a and 11b, are formed in such a manner that they pass through the substrate 101 and the foam layer 102 and reach the surface layer 103, as shown in Figure 3B, a high-temperature gas produced when a laser beam passes through the foam layer 102 melts neighbouring portions of the foam layer 102, so that a relatively large cavity is produced between the substrate 101 and the surface layer 103 around each hole 16.

Therefore, the conventional airbag cover 10 has the following problem. When the flange portion of the frame and the reinforcement members are vibration-welded to the reverse surface of the airbag cover 10, the foam layer 102 interposed between the substrate 101 and the surface layer 103 is compressed and deformed, and undulations are formed on the outer surface of the airbag cover 10, whereby the appearance of the airbag cover 10 is spoilt.

Preferred embodiments of the present invention aim to provide an airbag cover which can prevent generation of sink marks or depressions on the surface of the cover during attachment of components of an airbag apparatus to the airbag cover.

Another aim is to provide an airbag cover which secures reliable opening of fracture-opening subsections formed when the airbag cover is ruptured along the fracture grooves upon inflation of an airbag, thereby to facilitate deployment of the airbag toward the outside of the airbag cover.

Still another aim is to provide an airbag apparatus for a vehicle which employs such an airbag cover.

FR 2 793 297 discloses an airbag cover having features according to the pre-characterising clause of claim 1.

According to the present invention, there is provided an airbag cover including a panel member for covering an airbag, the panel member comprising:
a substrate formed of a resin;
a foam layer formed of a resin and layered over and bonded to a surface of the substrate; and
a surface layer layered over and bonded to a surface of the foam layer: wherein:
   the panel member has a fracture-opening section of an area required for inflation and deployment of the airbag;
   a fracture groove is formed in the fracture-opening section so as to define two fracture-opening subsections which can be opened in the manner of a casement, the fracture groove being formed on a reverse surface of the substrate and having a depth corresponding to the thickness of the substrate or a depth slightly greater than the thickness of the substrate;
   the fracture groove is composed of a straight centre fracture groove section for dividing the fracture-opening section into the fracture-opening subsections; and
   first and second hinge grooves for pivotal motion of the fracture-opening subsections are formed on the reverse surface of the substrate such that the first hinge groove extends between the ends of the first side fracture groove sections and the second hinge groove extends between the ends of the second side fracture groove sections; wherein:
      two branch fracture groove sections extend from the opposite ends of the centre fracture groove section and assume a V-like shape, first side fracture groove sections extend from distal ends of the V-shaped branch fracture groove sections in a first direction perpendicularly to the centre fracture groove section, and second side fracture groove sections extend from the opposite ends of the centre fracture groove section in a second direction opposite the first direction;
      the fracture groove and the hinge grooves are each composed of a plurality of small holes successively formed on the reverse surface of the substrate through irradiation with a laser beam;
      small holes constituting the fracture groove adjoin each other and have a depth corresponding to the thickness of the substrate or a depth slightly greater than the thickness of the foam layer; and
      small holes constituting the hinge grooves are separated from each other and have a depth about half the thickness of the substrate.

In preferred embodiments of the invention, by virtue of the above-described configuration, even though the fracture groove is not formed in the foam layer and the surface layer, by means of rupture corner portions of the substrate ruptured along the fracture groove and the impact force acting on the fracture-opening subsections upon inflation of the airbag, the foam layer and the surface layer can be readily ruptured along the fracture groove. In addition, the opening of the fracture-opening subsections in the manner of a casement upon inflation of the airbag can be reliably performed in a well-balanced manner, and generation of a crack or breakage of the airbag cover, which would otherwise occur upon inflation of the airbag, can be prevented. In particular, the above-described effect can be achieved without fail through employment of reinforcement members, which reinforce the fracture-opening section from the reverse surface side of the plate member. Moreover, since the fracture groove is not required to from in the foam layer and the surface layer of the panel member, no sink or depression is formed on the surface of the surface layer of the airbag cover. Therefore, the appearance of the airbag cover 22 is improved, and the aesthetic effect is improved.

Preferably, the fracture groove further includes two branch fracture groove sections extending from the opposite ends of the centre fracture groove section and assuming a V-like shape; and the first and second side fracture groove sections extend from distal ends of the V-shaped branch fracture groove sections.

In preferred embodiments of the invention, at the opposite ends of the centre fracture groove section, the fracture-opening subsections are ruptured along Y-shaped lines formed by the V-shaped branch fracture groove sections and the side fracture groove sections, so that the foam layer and the surface layer are ruptured along Y-shaped lines at the opposite ends of the centre fracture groove section. Therefore, the airbag can readily deploy without fail toward the outer side of the cover when the fracture-opening subsections open in the manner of a casement.

The centre fracture groove section may be offset from the boundary between the fracture-opening subsections toward one of the fracture-opening subsections, so that the area of the other fracture-opening subsection becomes larger than that of said one fracture-opening subsection.

Such a configuration may enable the airbag to inflate and deploy to a direction inclined toward the fracture-opening subsection having a smaller area.

Preferably, a central portion of the centre fracture groove section with respect to its longitudinal direction has a depth slightly greater than the thickness of the substrate, and the remaining portions of the centre fracture groove section have a depth corresponding to the thickness of the substrate.

In such a case, when the airbag inflates, the panel member may start to rupture from the central portion of the centre rupture groove section, so that the panel member may be equally ruptured toward the left and right.

The invention also provides an airbag apparatus for a vehicle, the apparatus comprising:
an airbag;
an airbag cover according to any of the preceding aspects of the invention;
an airbag case disposed behind the airbag cover and accommodating the airbag in a folded condition;
an inflator for supplying a gas to the airbag so as to inflate and deploy the airbag;
a frame formed of a resin, fixed to a reverse surface of the panel member so as to surround a fracture-opening section of an area required for inflation and deployment of the airbag and supporting the airbag case; and
a reinforcement member formed of a resin, supported by the frame and reinforcing the fracture-opening section from the reverse surface side thereof, wherein:
   a central portion of the centre fracture groove section with respect to its longitudinal direction has a depth slightly greater than the thickness of the foam layer and the remaining portions of the centre fracture groove section have a depth corresponding to the thickness of the substrate.

Preferably, the frame and the reinforcement members are vibration-welded to the reverse surface of the substrate before the foam layer and the surface layer are layered over and bonded to the substrate.

For a better understanding of the invention, and to show how embodiments of the same may be carried into effect, reference will now be made, by way of example, to the accompanying diagrammatic drawings, in which:
Figure 1 is a perspective view of a conventional airbag cover;
Figure 2 is a plan view of the airbag cover shown in Figure 1;
Figure 3A is an enlarged cross-sectional view of the airbag cover taken along line 3-3 of Figure 2;
Figure 3B is an enlarged view of a portion of Figure 3A;
Figure 4 is a vertical sectional view of a main portion of an airbag apparatus for a vehicle which employs an airbag cover according to one example of a first embodiment of the present invention;
Figure 5 is a plan view of the airbag apparatus of Figure 4 as viewed in the direction of arrow 5;
Figure 6A is an enlarged cross-sectional view of the airbag cover taken along line 6-6 of Figure 5;
Figure 6B is an enlarged cross-sectional view of the airbag cover taken along line 6-6 of Figure 5;
Figure 7 is an enlarged cross-sectional view of the airbag cover taken along line 7-7 of Figure 5;
Figure 8 is a perspective view of the airbag cover according to the first embodiment, showing its fracture-opening subsections;
Figure 9 is an explanatory view of the airbag cover according to the first embodiment showing the relation between the fracture-opening subsections and the surface layer at the time when the fracture-opening subsections are opened; and
Figure 10 is a vertical sectional view of a main portion of an airbag apparatus for a vehicle which employs an airbag cover according to an example of a second embodiment of the present invention.

In the figures, like references denote like or corresponding parts.

In the following described examples of the present invention, an airbag apparatus employing an airbag cover is provided in front of a front passenger seat of an automobile.

### First Embodiment:

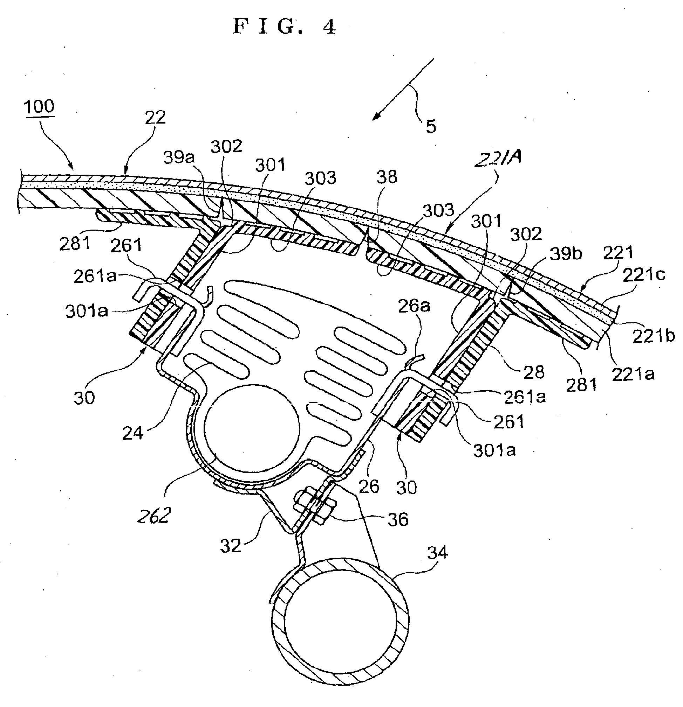

An airbag cover according to the first embodiment and an airbag apparatus employing the airbag cover will be described with reference to Figures 4 to Figure 8.

As shown in Figure 4, an airbag apparatus 100 for a vehicle includes an airbag cover (interior panel cover) 22, an airbag 24, an airbag case 26, a frame 28, a pair of reinforcement members 30, an inflator (not shown), etc.

The airbag cover 22 is composed of a panel member 221 formed of a synthetic resin. The panel member 221 is formed into a three-dimensionally curved shape for covering the airbag 24 and covering an interior panel core (not shown) formed of a synthetic resin, and is secured to the interior panel core by means of, for example, self-tapping screws.

As shown in Figures 4, 6, and 7, the panel member 221 includes a substrate 221a formed of hard polypropylene (PP) and having a thickness of 3 mm to 4 mm; a foam layer 221b layered over and bonded to the surface of the substrate 221a, formed of foamed polypropylene, and having a thickness of 1.5 mm to 2 mm; and a surface layer 221 c layered over and bonded to the surface of the foam layer 221b, formed of thermoplastic polyolefin (TPO), and having a thickness of 0.6 mm to 1 mm.

As shown in Figure 4, the airbag 24 is accommodated in a folded condition within the airbag case 26 formed from a metallic plate material.

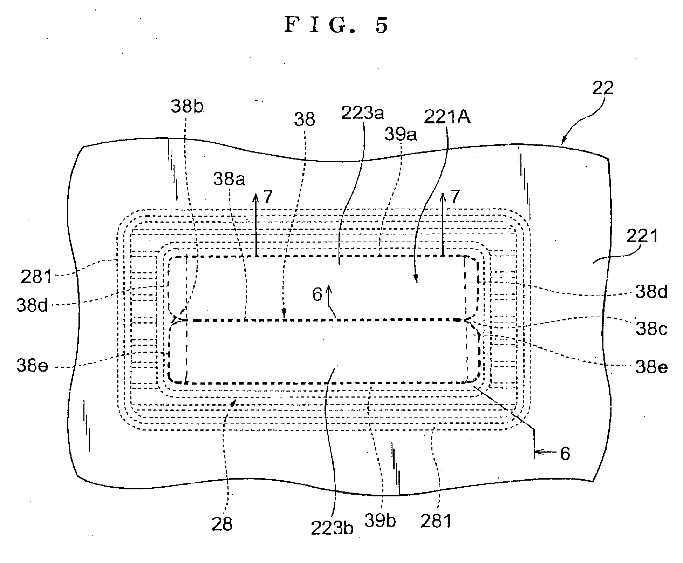

As shown in Figures 4 and 5, the frame 28 holds the airbag case 26 and the reinforcement members 30 on the reverse surface side of the airbag cover 22. The frame 28 is formed of a highly elastic, polypropylene-based resin material containing a reinforcing material such as talc and glass fibre in an amount of 10 to 30% by weight, and assumes the form of a rectangular tube having a transverse cross-sectional area which corresponds to a rectangular fracture-opening section 221A of an area required to inflate and deploy the airbag 24. A joint flange 281 is integrally formed at the upper end of the frame 28 near the panel member 221, and is bonded, by means of vibration welding or any other suitable process, to the reverse surface of the substrate 221a of the panel member 221.

As shown in Figures 4 and 5, the paired reinforcement members 30 reinforce the fracture-opening section 221A of the panel member 221 from the reverse side thereof, and are formed of a synthetic resin such as polypropylene (PP) or thermoplastic polyolefin (TPO). Each of the reinforcement members 30 includes a support portion 301 coupled with the inner wall surface of the frame 28 via a dovetail; and a reinforcement portion 303 which is connected via a hinge portion 302 to the upper end of the support portion 301 in a bendable manner and is bonded to the reverse surface of the fracture-opening section 221A by means of vibration welding or any other suitable process.

A plurality of hooks 261 are provided on the side wall portions of the airbag case 26 in the vicinity of an upper end opening 26a thereof, the side wall portions facing the support portions 301 of the corresponding reinforcement members 30. The hooks 261 are engaged with square holes 301a formed in the support portions 301 and holes 261a formed in the frame 28 to correspond to the holes 301a, whereby the airbag case 26 is secured to the frame 28. An inflator accommodation portion 262 is provided at the lower end of the airbag case 26 so as to accommodate an inflator (not shown) for supplying an inflation gas to the airbag 24. The airbag case 26 is fixed to a stationary member, such as a cross member 34, via a support member 32 and by means of a bolt and nut 36.

As shown in Figure 5, a fracture groove 38 extending in the lateral direction is formed in the above-mentioned fracture-opening section 221A of the panel member 221.

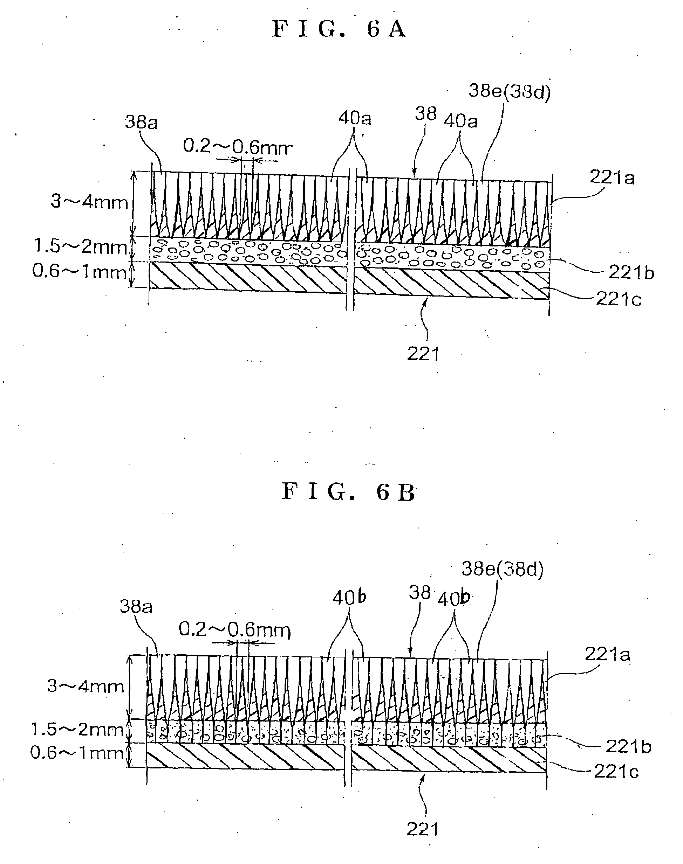

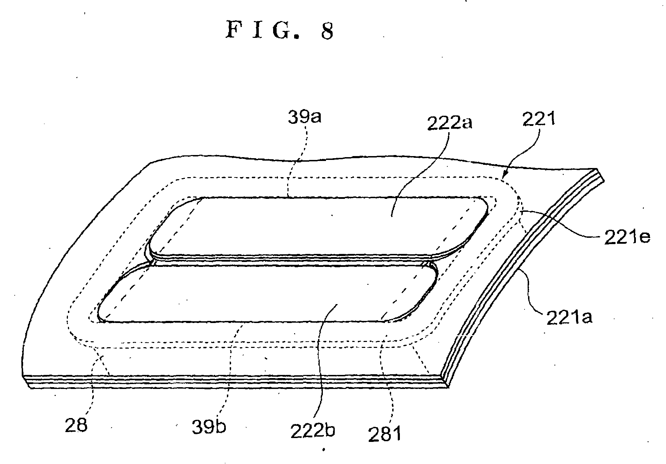

The fracture groove 38 is provided so as to form fracture-opening subsections 222a and 222b (see Figure 8) in the fracture-opening section 221A in such a manner that the fracture-opening subsections 222a and 222b can be opened in opposite directions (in the manner of a casement) when the fracture-opening section 221A is ruptured along the fracture groove 38 upon inflation of the airbag 24. As shown in Figures 6A and 6B, the fracture groove 38 is a groove which is formed on the reverse surface of the substrate 221a to a depth corresponding to the thickness of the substrate 221a or a depth slightly greater than the thickness of the substrate 221a, so that the groove reaches the foam layer 221b.

As shown in Figure 5, the fracture groove 38, which forms the fracture-opening subsections 222a and 222b openable in the manner of a casement, is composed of a centre fracture groove section 38a, two branch fracture groove sections 38b and 38c, and two pairs of side fracture groove sections 38d and 38e. The centre fracture groove section 38a extends straight in the longitudinal direction (the direction parallel to the longer sides), and divides the fracture-opening section 221A into two sections in the top-bottom direction (the direction parallel to the shorter sides). The branch fracture groove sections 38b and 38c extend from the opposite ends of the centre fracture groove section 38a, and assume a V-like shape. Each pair of side fracture groove sections 38d and 38e extends from the distal ends of the V-shaped branch fracture groove section 38b or 38c upward and downward, respectively, in Figure 5 (the direction parallel to the shorter sides).

The centre fracture groove section 38a may be offset from the boundary between the fracture-opening subsections 222a and 222b toward the fracture-opening subsection 222b, so that the area of the fracture-opening subsection 222a becomes larger than that of the fracture-opening subsection 222b.

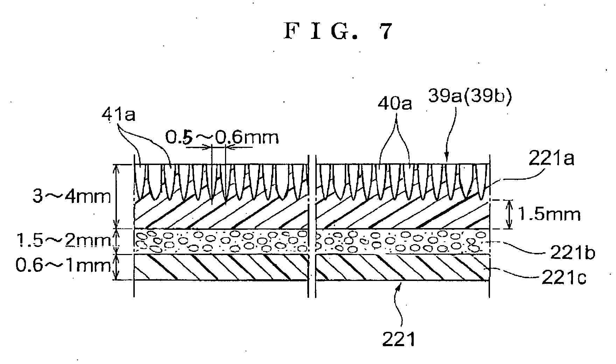

Hinge grooves 39a and 39b for pivoting motion of the fracture-opening subsections 222a and 222b are formed on the fracture-opening section 221A such that the hinge groove 39a extends between the ends of the side fracture groove sections 38d, which are located on the upper side of the centre fracture groove section 38a in Figure 5, and the hinge groove 39b extends between the ends of the side fracture groove sections 38e, which are located on the lower side of the centre fracture groove section 38a in Figure 5. As shown in Figure 7, the hinge grooves 39a and 39b are grooves which are formed on the reverse surface of the substrate 221a to a depth about half the depth of the fracture groove 38.

The fracture groove 38 is formed by forming successive small holes 40a, 40b along a predetermined line on the reverse surface of the panel member 221 through irradiation with a pulsed laser beam from the reverse surface of the substrate 221a, in such a manner that the small holes do not pass completely through the panel member 221, as shown in Figures 6A and 6B.

In the example shown in Figure 6A, the fracture groove 38 is formed by means of a plurality of the small holes 40a which adjoin each other and which have a depth corresponding to the thickness (3 to 4 mm) of the substrate 221a.

In the example shown in Figure 6B, the fracture groove 38 is formed by means of a plurality of the small holes 40b which adjoin each other and which pass through the substrate 221a and reach the foam layer 221b, so that the small holes 40b are not provided in the surface layer 221c.

Each of the small holes 40a and 40b has a shape resembling a tip end of a bombshell - that is, each hole 40a and 40b may be of substantially circular cross-section that tapers towards a tip so that the transverse cross-sectional area, which is the maximum at the opening at the reverse surface of the substrate 221a, decreases toward the foam layer 221b. The small holes 40a and 40b having such a shape can be formed through control of the number of pulses or irradiation time of a laser beam emitted from a laser.

The above-described hinge grooves 39a and 39b are formed by forming successive small holes 41a along predetermined lines on the reverse surface of the panel member 221 through irradiation with a pulsed laser beam from the reverse surface of the substrate 221a, in such a manner that the small holes do not pass completely through the panel member 221, as shown in Figure 7.

That is, as shown in Figure 7, each of the hinge grooves 39a and 39b is formed by means of a plurality of the small holes 41 a which are separated from each other and which have a depth ((3 to 4 mm) - 1.5 mm), which is about half the thickness (3 to 4 mm) of the substrate 221a. For example, the small holes 41 a are formed at intervals of 0.5mm to 0.6mm by means of a laser cutting process.

As shown in Figure 5, the branch fracture groove sections 38b and 38c and the side fracture groove sections 38d and 38e of the fracture groove 38 overlap the flange portion 281 of the frame 28, which is bonded to the reverse surface of the substrate 221a to surround the fracture-opening section 221A.

The fracture groove 38 and the hinge grooves 39a and 39b may be formed by use of an infrared laser beam having a diameter of 0.2 to 0.5 mm and a wavelength of 10.6 µm.

The thus-configured airbag apparatus 100 of the first embodiment functions in the following manner. Upon collision of the vehicle, an impact force caused by the collision is detected by a sensor (not shown). A control unit including a CPU judges whether or not the detected impact force is equal to or greater than a predetermined value. When the control unit judges that the impact force is equal to or greater than the predetermined value, the control unit issues a signal for causing the inflator to generate a predetermined amount of gas. The gas is fed to the airbag 24 so as to promptly inflate the airbag 24.

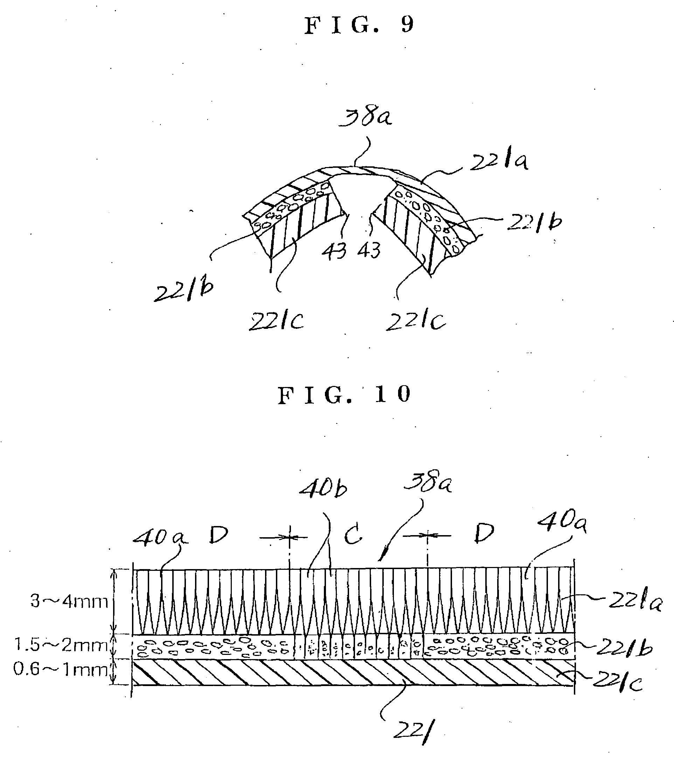

When the airbag 24 promptly inflates, pressure generated at the beginning of the inflation acts on the fracture-opening section 221A via the reinforcement portions 303 of the reinforcement members 30. As a result, the fracture-opening section 221A is ruptured along the fracture groove 38, and the fracture-opening subsections 222a and 222b formed as a result of the rupture are opened toward the outside of the panel member 221 in the manner of a casement as shown in Figure 8, while being turned about hinge grooves 39a and 39b. At this time, as shown in Figure 9, rupture corner portions 43 of the substrate 221a ruptured along the fracture groove 38 are pressed against the surface layer 221c. Therefore, the foam layer 221b is ruptured by means of the rupture corner portions 43 and the impact force acing on the fracture-opening subsections 222a and 222b upon inflation of the airbag, and the surface layer 221c is expanded and ruptured along the fracture groove 38.

Simultaneously with this, the airbag 24 inflates and deploys toward the outside of the panel member 221 as the fracture-opening subsections 222a and 222b open in the opposite directions. Serving as a cushion, the inflated airbag 24 supports the passenger at his/her chest or head, thereby protecting the passenger from the impact force of collision.

In the airbag apparatus 100 according to the first embodiment, the fracture groove 38, which forms the fracture-opening subsections 222a and 222b in the fracture-opening section 221A of the panel member 221 composed of the substrate 221a, the foam layer 221b, and the surface layer 221c, is formed by successively forming the mutually adjacent small holes 40a or 40b along a predetermined line on the reverse surface of the panel member 221 by means of laser cutting from the reverse surface of the substrate 221a; the hinge groves 39a and 39b for pivoting motion of the fracture-opening subsections 222a and 222b are formed by successively forming the mutually separated small holes 41a along predetermined lines on the reverse surface of the panel member 221 by means of laser cutting from the reverse surface of the substrate 221a; and when the airbag 24 is inflated, the fracture-opening section of the panel member 221 is ruptured along the fracture groove 38, whereby the fracture-opening subsections 222a and 222b are caused to open in the manner of a casement about the hinge grooves 39a and 39b. Therefore, even though fracture grooves are not formed on the foam layer 221b or the surface layer 221c, by means of the rupture corner portions 43 of the substrate 221a ruptured along the fracture groove 38 and the impact force acing on the fracture-opening subsections 222a and 222b upon inflation of the airbag, the foam layer 221b and the surface layer 221c can be readily ruptured along the fracture groove 38. In addition, the opening of the fracture-opening subsections 222a and 222b in the manner of a casement upon inflation of the airbag 24 can be reliably performed in a well-balanced manner, and generation of a crack or breakage of the airbag cover 22, which would otherwise occur upon inflation of the airbag 24, can be prevented.

In particular, the above-described effect can be achieved without fail through employment of the reinforcement members 30, which reinforce the fracture-opening section 221A from the reverse surface side of the substrate 221a. Moreover, since fracture grooves are not required to be formed in the foam layer 221a and the surface layer 221c of the panel member 221, no sink mark or depression is formed on the surface of the surface layer 221c of the airbag cover 22. Therefore, the appearance of the airbag cover 22 is improved, and the aesthetic effect is improved.

In the first embodiment, the fracture groove 38 is composed of the straight centre fracture groove section 38a, which divides the fracture-opening section 221A into two sections in the top-bottom direction (the direction parallel to the shorter sides); the branch fracture groove sections 38b and 38c, which extend from the opposite ends of the centre fracture groove section 38a, and assume a V-like shape; and the pairs of side fracture groove sections 38d and 38e, which extend from the distal ends of the V-shaped branch fracture groove sections 38b and 38c in opposite directions. Therefore, at the opposite ends of the centre fracture groove section 38a, the fracture-opening subsections 222a and 222b are ruptured along Y-shaped lines formed by the V-shaped branch fracture groove sections 38b and 38c and the side fracture groove sections 38d and 38e, so that the foam layer 221b and the surface layer 221c are ruptured along Y-shaped lines at the opposite ends of the centre fracture groove section 38a. Therefore, the airbag can readily deploy without fail toward the outer side of the cover when the fracture-opening subsections 222a and 222b open in the manner of a casement.

In the first embodiment, if the frame 28 and the reinforcement members 30 are vibration-welded to the reverse surface of the substrate 221 a before the foam layer 221b and the surface layer 221c are layered over and bonded to the substrate 221a, damage to the foam layer 221b of the panel member 221 may be prevented.

In the first embodiment, when the centre fracture groove section 38a is offset from the boundary between the fracture-opening subsections 222a and 222b toward the fracture-opening subsection 222b, so that the area of the fracture-opening subsection 222a becomes larger than that of the fracture-opening subsection 222b, the airbag 24 can reliably inflate and deploy toward a passenger in the front-passenger seat of the automobile, thereby to secure safety of the passenger.

In the first embodiment, as shown in Figure 5, the branch fracture groove sections 38b and the side fracture groove sections 38d and 38e of the fracture groove 38 overlap the flange portion 281 of the frame 28, which is bonded to the reverse surface of the substrate 221a. Therefore, even when a pressing force is externally applied to the fracture-opening section 221A of the airbag cover 22, the fracture-opening section 221A hardly deforms; that is, the fracture-opening section 221A has increased strength.

In the first embodiment, the frame 28 and the reinforcement members 30 are each formed of a resin material, and are vibration-welded to the reverse surface of the panel member 221. Therefore, the productivity of the airbag cover 22 can be improved, and production cost can be reduced.

Notably, the fracture groove 38 and the hinge grooves 39a and 39b are not limited to grooves composed of small holes formed by means of laser cutting as shown in Figures 6A, 6B, and 7, and may be grooves which are continuously or intermittently formed on the back surface of the substrate 221a of the panel member 221 by use of a cutting tool or the like.

### Second Embodiment:

Another example of the present invention will now be described with reference to Figure 10, which corresponds to Figures 6A and 6B.

The second embodiment differs from the first embodiment in the depth of the centre fracture groove section 38a, which divides the fracture-opening section into two subsections.

That is, a central portion C of the centre fracture groove section 38a with respect to the longitudinal direction is composed of small holes 40b having a depth slightly greater than the thickness of the substrate 221a so that the small holes 40b reach the foam layer 221b, and right-hand and left-hand end portions D of the centre fracture groove section 38a with respect to the longitudinal direction are each composed of small holes 40a having a depth corresponding to the thickness of the substrate 221a. Since other structural components are identical to those of the first embodiment, they are denoted by the same reference numerals, and their description is not repeated.

In the second embodiment, when the airbag inflates, the rupture of the panel member 221 starts from the central portion of the centre rupture groove section, so that the panel member 221 is equally ruptured toward the left and right.

The method of bonding the frame 28 and the reinforcement members 30 to the reverse surface of the substrate 221a is not limited to vibration welding as mentioned in the above-described embodiments, and adhesive may be used to bond the frame 28 and the reinforcement members 30 to the reverse surface of the substrate 221a.

Embodiments of the present invention can be applied to airbag apparatuses from which the reinforcement members 30 are omitted.

Obviously, numerous modifications and variations of the present invention are possible in light of the above teachings. It is therefore to be understood that other examples of the present invention may be practiced otherwise than as specifically described herein.

In this specification, the verb "comprise" has its normal dictionary meaning, to denote non-exclusive inclusion. That is, use of the word "comprise" (or any of its derivatives) to include one feature or more, does not exclude the possibility of also including further features.

## Claims

1. An airbag cover (22) including a panel member (221) for covering an airbag (24), the panel member (221) comprising:
a substrate (221 a) formed of a resin;
a foam layer (221 b) formed of a resin and layered over and bonded to a surface of the substrate (221a); and
a surface layer (221c) layered over and bonded to a surface of the foam layer (221b): wherein:
the panel member (221) has a fracture-opening section (221A) of an area required for inflation and deployment of the airbag (24);
a fracture groove (38) is formed in the fracture-opening section (221A) so as to define two fracture-opening subsections (222a, 222b) which can be opened in the manner of a casement, the fracture groove (38) being formed on a reverse surface of the substrate (221a) and having a depth corresponding to the thickness of the substrate (221 a) or a depth slightly greater than the thickness of the substrate (221a);
the fracture groove (38) is composed of a straight centre fracture groove section (38a) for dividing the fracture-opening section (221A) into the fracture-opening subsections (222a, 222b); and
first and second hinge grooves (39a, 39b) for pivotal motion of the fracture-opening subsections (222a, 222b) are formed on the reverse surface of the substrate (221a) such that the first hinge groove (39a) extends between the ends of the first side fracture groove sections (38d) and the second hinge groove (39b) extends between the ends of the second side fracture groove sections (38e):
**characterised in that**:
two branch fracture groove sections (38b, 38c) extend from the opposite ends of the centre fracture groove section (38a) and assume a V-like shape, first side fracture groove sections (38d) extend from distal ends of the V-shaped branch fracture groove sections (38b, 38c) in a first direction perpendicularly to the centre fracture groove section (38a), and second side fracture groove sections (38e) extend from the distal ends of the V-shaped branch fracture groove sections (38b, 38c) in a second direction opposite the first direction;
the fracture groove (38) and the hinge grooves (39a, 39b) are each composed of a plurality of small holes successively formed on the reverse surface of the substrate (221 a) through irradiation with a laser beam;
small holes constituting the fracture groove (38) adjoin each other and have a depth corresponding to the thickness of the substrate (221 a) or a depth slightly greater than the thickness of the foam layer (221 b); and
small holes constituting the hinge grooves (39a, 39b) are separated from each other and have a depth about half the thickness of the substrate (221a).

2. An airbag cover (22) according to claim 1, wherein the centre fracture groove section (38a) is offset from the boundary between the fracture-opening subsections (222a, 222b) toward one of the fracture-opening subsections (222a, 222b), so that the area of the other fracture-opening subsection becomes larger than that of said one fracture-opening subsection.

3. An airbag cover (22) according to claim 1 or 2, wherein a central portion (C) of the centre fracture groove section (38a) with respect to its longitudinal direction has a depth slightly greater than the thickness of the substrate (221a), and the remaining portions (D) of the centre fracture groove section (38a) have a depth corresponding to the thickness of the substrate (221a).

4. An airbag apparatus (100) for a vehicle, the apparatus comprising:
an airbag (24);
an airbag cover (22) according to claim 1, 2 or 3;
an airbag case (26) disposed behind the airbag cover (22) and accommodating the airbag (24) in a folded condition;
an inflator for supplying a gas to the airbag (24) so as to inflate and deploy the airbag (24);
a frame (28) formed of a resin, fixed to a reverse surface of the panel member (221) so as to surround a fracture-opening section (221A) of an area required for inflation and deployment of the airbag (24) and supporting the airbag case (26); and
a reinforcement member (30) formed of a resin, supported by the frame (28) and reinforcing the fracture-opening section (221A) from the reverse surface side thereof, wherein:
a central portion of the centre fracture groove section (38a) with respect to its longitudinal direction has a depth slightly greater than the thickness of the foam layer (221 b) and the remaining portions of the centre fracture groove section (38a) have a depth corresponding to the thickness of the substrate (221 a).

5. An airbag apparatus for a vehicle according to claim 4, wherein the frame (28) and the reinforcement members (30) are vibration-welded to the reverse surface of the substrate (221 a) before the foam layer (221 b) and the surface layer (221c) are layered over and bonded to the substrate (221a).

## Patentansprüche

1. Eine Airbag-Abdeckung (22) mit einem Blendenelement (221) zur Abdeckung eines Airbags (24), wobei das Blendenelement (221) Folgendes umfasst:
eine Trägerschicht (221a), die aus einem Harz gebildet wird;
eine Schaumschicht (221 b), die aus einem Harz gebildet wird und mit der eine Oberfläche der Trägerschicht (221 a) beschichtet und beklebt wird; und
eine Deckschicht (221 c), mit der eine Oberfläche der Schaumschicht (221 b) beschichtet und beklebt wird; worin
das Blendenelement (221) einen Bruchöffnungsabschnitt (221A) mit einer Fläche aufweist, die für das Aufblasen und die Entfaltung des Airbags (24) erforderlich ist;
eine Bruchnut (38) im Bruchöffnungsabschnitt (221A) gebildet wird, sodass sich zwei Bruchöffnungsunterabschnitte (222a, 222b) bilden, die in der Art eines Gehäuses geöffnet werden können, wobei die Bruchnut (38) auf einer Rückseite der Trägerschicht (221 a) gebildet wird und eine Tiefe entsprechend der Dicke der Trägerschicht (221 a) oder eine Tiefe, die etwas größer als die Dicke der Trägerschicht (221 a) ist, aufweist;
die Bruchnut (38) sich aus einem geraden mittleren Bruchnutenabschnitt (38a) zur Unterteilung des Bruchöffnungsabschnitts (221A) in die Bruchöffnungsunterabschnitte (222a, 222b) zusammensetzt; und
die erste und zweite Bruchnut (39a, 39b) für eine Schwenkbewegung der Bruchöffnungsunterabschnitte (222a, 222b) auf der Rückseite der Trägerschicht (221 a) gebildet werden, sodass die erste Scharniernut (39a) sich zwischen den Enden der ersten Seitenbruchnutenabschnitte (38d) erstreckt und die zweite Scharniernut (39b) sich zwischen den Enden der zweiten Seitenbruchnutenabschnitte (38e) erstreckt;
**dadurch gekennzeichnet, dass**:
zwei abzweigende Bruchnutenabschnitte (38b, 38c) sich von den gegenüberliegenden Enden des zentralen Bruchnutenabschnitts (38a) erstrecken und eine V-artige Form annehmen, die ersten Seitenbruchnutenabschnitte (38d) sich von den distalen Enden der V-förmigen abzweigenden Bruchnutenabschnitte (38b, 38c) in eine erste Richtung senkrecht zum zentralen Bruchnutenabschnitt (38a) erstrecken und die zweiten Seitenbruchnutenabschnitte (38e) sich von den distalen Enden der V-förmigen abzweigenden Bruchnutenabschnitte (38b, 38c) in eine zweite Richtung entgegengesetzt der ersten Richtung erstrecken;
die Bruchnut (38) und die Scharniernuten (39a, 39b) beide aus einer Vielzahl von kleinen Löchern zusammengesetzt sind, die durch Bestrahlung mit einem Laserstrahl nacheinander auf der Rückseite der Trägerschicht (221 a) gebildet werden;
kleine Löcher, die die Bruchnut (38) darstellen, aneinander angrenzen und eine Tiefe, die der Dicke der Trägerschicht (221 a) entspricht oder die etwas größer als die Dicke der Schaumschicht (221 b) ist, aufweisen; und
kleine Löcher, die die Scharniernuten (39a, 39b) darstellen, voneinander getrennt sind und eine Tiefe aufweisen, die der Hälfte der Dicke der Trägerschicht (221 a) entspricht.

2. Eine Airbag-Abdeckung (22) gemäß Anspruch 1, worin der zentrale Bruchnutenabschnitt (38a) von der Grenze zwischen den Bruchöffnungsunterabschnitten (222a, 222b) zu einer der Bruchöffnungsunterabschnitte (222a, 222b) hin versetzt ist, sodass die Fläche des anderen Bruchöffnungsunterabschnitts größer wird als jene des besagten einen Bruchöffnungsunterabschnitts.

3. Eine Airbag-Abdeckung (22) gemäß Anspruch 1 oder 2, worin ein zentraler Anteil (C) des zentralen Bruchnutenabschnitts (38a) hinsichtlich seiner Längsrichtung eine Tiefe aufweist, die etwas größer ist als die Dicke der Trägerschicht (221 a), und die übrigen Anteile (D) des zentralen Bruchnutenabschnitts (38a) eine Tiefe entsprechend der Dicke der Trägerschicht (221 a) aufweisen.

4. Eine Airbag-Vorrichtung (100) für ein Fahrzeug, wobei die Vorrichtung Folgendes umfasst:
einen Airbag (24);
eine Airbag-Abdeckung (22) gemäß Anspruch 1, 2 oder 3;
ein Airbag-Gehäuse (26), das sich hinter der Airbag-Abdeckung (22) befindet und den Airbag (24) in einem gefalteten Zustand unterbringt;
eine Aufblasvorrichtung, die Gas zum Airbag (24) leitet, um den Airbag (24) aufzublasen und zu entfalten;
einen Rahmen (28), der aus einem Harz gebildet wird und an einer Rückseite des Blendenelements (221) befestigt ist, sodass er einen Bruchöffnungsabschnitt (221A) mit einer Fläche umgibt, die zum Aufblasen und zur Entfaltung des Airbags (24) notwendig ist, und der das Airbag-Gehäuse (26) unterstützt; und
ein Verstärkungselement (30), das aus einem Harz gebildet wird und vom Rahmen (28) unterstützt wird und das den Bruchöffnungsabschnitt (221A) von dessen Rückseite verstärkt, worin:
ein zentraler Anteil des zentralen Bruchnutenabschnitts (38a) im Hinblick auf seine Längsrichtung eine Tiefe aufweist, die etwas größer ist als die Dicke der Schaumschicht (221 b), und die übrigen Anteile des zentralen Bruchnutenabschnitts (38a) eine Tiefe aufweisen, die der Dicke der Trägerschicht (221 a) entspricht.

5. Eine Airbag-Vorrichtung für ein Fahrzeug gemäß Anspruch 4, worin der Rahmen (28) und die Verstärkungselemente (30) an die Rückseite der Trägerschicht (221 a) vibrationsverschweißt werden, bevor die Trägerschicht (221 a) mit der Schaumschicht (221 b) und der Deckschicht (221 c) beschichtet und verklebt wird.

## Revendications

1. Un couvercle de coussin gonflable (22) comprenant un élément formant panneau (221) destiné à couvrir un coussin gonflable (24), l'élément formant panneau (221) comprenant :
un substrat (221 a) formé d'une résine,
une couche de mousse (221 b) formée d'une résine et couchée sur et encollée à une surface du substrat (221 a), et
une couche de surface (221c) couchée sur et encollée à une surface de la couche de mousse (221 b), où :
l'élément formant panneau (221) possède une section à ouverture par fracture (221A) d'une zone requise pour le gonflage et le déploiement du coussin gonflable (24),
une rainure de fracture (38) est formée dans la section à ouverture par fracture (221A) de façon à définir deux sous-sections à ouverture par fracture (222a, 222b) qui peuvent être ouvertes à la manière d'un battant, la rainure de fracture (38) étant formée sur une surface verso du substrat (221a) et possédant une profondeur correspondant à l'épaisseur du substrat (221 a) ou une profondeur légèrement plus grande que l'épaisseur du substrat (221 a),
la rainure de fracture (38) se compose d'une section de rainure de fracture centrale rectiligne (38a) destinée à diviser la section à ouverture par fracture (221 A) en les sous-sections à ouverture par fracture (222a, 222b), et
une première et une deuxième rainures d'articulation (39a, 39b) destinées à un mouvement pivotant des sous-sections à ouverture par fracture (222a, 222b) sont formées sur la surface verso du substrat (221 a) de sorte que la première rainure d'articulation (39a) s'étend entre les extrémités des premières sections de rainures d'articulation latérales (38d) et la deuxième rainure d'articulation (39b) s'étend entre les extrémités des deuxièmes sections de rainures d'articulation latérales (38e) :
**caractérisé en ce que**
deux sections de rainure de fracture ramifiées (38b, 38c) s'étendent des extrémités opposées de la section de rainure de fracture centrale (38a) et présentent une forme en V, les premières sections de rainures d'articulation latérales (38d) s'étendent des extrémités distales des sections de rainure de fracture ramifiées en forme de V (38b, 38c) dans une première direction perpendiculairement à la section de rainure de fracture centrale (38a), et les deuxièmes sections de rainures d'articulation latérales (38e) s'étendent des extrémités distales des sections de rainure de fracture ramifiées en forme de V (38b, 38c) dans une deuxième direction opposée à la première direction,
la rainure de fracture (38) et les rainures d'articulation (39a, 39b) se composent chacune d'une pluralité de petits trous formés de manière successive sur la surface verso du substrat (221 a) par irradiation avec un faisceau laser,
de petits trous constituant la rainure de fracture (38) sont attenants les uns aux autres et possèdent une profondeur correspondant à l'épaisseur du substrat (221 a) ou une profondeur légèrement plus grande que l'épaisseur de la couche de mousse (221 b), et
de petits trous constituant les rainures d'articulation (39a, 39b) sont séparés les uns des autres et possèdent une profondeur d'environ la moitié de l'épaisseur du substrat (221 a).

2. Un couvercle de coussin gonflable (22) selon la Revendication 1, où la section de rainure de fracture centrale (38a) est décalée de la limite entre les sous-sections à ouverture par fracture (222a, 222b) vers l'une des sous-sections à ouverture par fracture (222a, 222b), de sorte que la zone de l'autre sous-section à ouverture par fracture devienne plus grande que celle de ladite une sous-section à ouverture par fracture.

3. Un couvercle de coussin gonflable (22) selon la Revendication 1 ou 2, où une partie centrale (C) de la section de rainure de fracture centrale (38a) par rapport à sa direction longitudinale possède une profondeur légèrement plus grande que l'épaisseur du substrat (221 a), et les parties restantes (D) de la section de rainure de fracture centrale (38a) possèdent une profondeur correspondant à l'épaisseur du substrat (221 a).

4. Un appareil à coussin gonflable (100) pour un véhicule, l'appareil comprenant :
un coussin gonflable (24),
un couvercle de coussin gonflable (22) selon la Revendication 1, 2 ou 3,
un boîtier de coussin gonflable (26) disposé derrière le couvercle de coussin gonflable (22) et logeant le coussin gonflable (24) dans un état plié,
un gonfleur destiné à fournir un gaz au coussin gonflable (24) de façon à gonfler et déployer le coussin gonflable (24),
un cadre (28) formé d'une résine, fixé à une surface verso de l'élément formant panneau (221) de façon à entourer une section à ouverture par fracture (221 A) d'une zone requise pour le gonflage et le déploiement du coussin gonflable (24) et soutenant le boîtier de coussin gonflable (26), et
un élément de renfort (30) formé d'une résine, soutenu par le cadre (28) et renforçant la section à ouverture par fracture (221 A) du côté de la surface verso de celle-ci, où :
une partie centrale de la section de rainure de fracture centrale (38a) par rapport à sa direction longitudinale possède une profondeur légèrement plus grande que l'épaisseur de la couche de mousse (221 b) et les parties restantes de la section de rainure de fracture centrale (38a) possèdent une profondeur correspondant à l'épaisseur du substrat (221 a).

5. Un appareil à coussin gonflable pour un véhicule selon la Revendication 4, où le cadre (28) et les éléments de renfort (30) sont soudés par friction vibratoire à la surface verso du substrat (221 a) avant la couche de mousse (221 b) et la couche de surface (221c) est couchée sur et encollée au substrat (221 a).
